# EUROPÄISCHE PATENTANMELDUNG

(11) **EP 0 965 802 A2**
(43) Veröffentlichungstag der Anmeldung: **22.12.1999**
(21) Anmeldenummer: 99111195.6
(22) Anmeldetag: 09.06.1999
(51) Int. Cl.: F24H 8/00, F24H 1/44

(54) **Brennwertheizkessel**

(30) Priorität: 12.06.1998 DE 19826094
(71) Anmelder: Viessmann Werke GmbH & Co, 35107 Allendorf (DE)
(72) Erfinder: Milchsack, Frank, 35216 Biedenkopf (DE)
(74) Vertreter: Wolf, Günter, Dipl.-Ing.

(57) **Zusammenfassung**

Die Erfindung betrifft einen Brennwertheizkessel zum Verbrennen flüssiger oder gasförmiger Brennstoffe, bestehend aus einem wasserführenden Gehäuse (1) mit Vor-und Rücklaufanschlüssen (2,3) und mit einer Brennkammer (4), hinter der mehrere parallel nebeneinander angeordnete, zu einem von den Heizgasen durchströmbaren Block (5) zusammengefaßte, im wesentlichen vertikal vom Wärmeträger durchströmbare Wassertaschen (6) angeordnet sind.
Nach der Erfindung ist ein solcher Heizkessel derart ausgebildet, daß die von der Brennkammer (4) aus im wesentlichen horizontal anströmbaren Wassertaschen (6) wasserseitig in zwei vertikal durchströmbare, unmittelbar nebeneinander angeorndete Zonen (7,8) gegliedert sind, von denen die heizgasabzugsseitige Zone (8), abgegrenzt gegen den wasserführenden Innenraum (I) des Gehäuses (1), zuströmseitig mit dem Rücklaufanschluß (3) in direter Verbindung steht und abströmseitig, ebenfalls abgegrenzt gegen den Innenraum (I), mit der Zuströmseite der brennkammerseitigen Zone (7), die abströmseitig in den Innenraum (I) des Gehäuses (1) ausmündet.

## Beschreibung

Die Erfindung betrifft einen Brennwertheizkessel zum Verbrennen flüssiger oder gasförmiger Brennstoffe, bestehend aus einem wasserführenden Gehäuse mit Vor-und Rücklaufanschlüssen und mit einer Brennkammer, hinter der mehrere parallel nebeneinander angeordnete, zu einem von den Heizgasen durchströmbaren Block zusammengefaßte, im wesentlichen vertikal vom Wärmeträger durchströmbare Wassertaschen angeordnet sind.

Derartige Heizkessel sind bspw. nach dem DE-U- 91 06 654.9 bekannt. Unter Auslegung und Anordnung der Wassertaschen für den sogenannten Brennwertbetrieb solcher Heizkessel ist dabei zu verstehen, daß diese Wassertaschen aufgrund ihrer Wärmeübertragungsflächengröße gezielt zu einer Kondensation der durchströmenden Heizgase führen, wobei die Anordnung der Taschen auf der Gasseite so getroffen ist, daß das gebildete Kondensat abfließen kann. Der Taschenblock ist dabei im Rücklaufbereich des Kesselgehäuses angeordnet und muß entsprechend groß ausgelegt sein, um eine ausreichende Herunterkühlung der Heizgase bis zur Kondensation erreichen zu können. Beim Heizkessel nach dem oben genannten DE-U-91 06 654 nimmt deshalb der Taschenblock fast die Hälfte des gesamten Kessels ein.

Der Erfindung liegt, ausgehend von einem Heizkessel der eingangs genannten Art, die Aufgabe zugrunde, diesen bei einfacher und kostengünstiger Bauweise dahingehend auszugestalten und zu verbessern, daß die Taschen des Taschenblockes in ihrer Funktion gezielter auf einen Brennwertbetrieb abgestellt sind, damit in Bezug auf die Gesamtgröße des Heizkessels wesentlich weniger als deren Hälfte einnehmen und damit der ganze Heizkessel vergleichsweise kompakt auszubilden ist.

Diese Aufgabe ist mit einem Heizkessel der gattungsgemäßen Art nach der Erfindung dadurch gelöst, daß die von der Brennkammer aus im wesentlichen horizontal anströmbaren Wassertaschen wasserseitig in zwei vertikal durchströmbare, unmittelbar nebeneinander angeordnete Zonen gegliedert sind, von denen die heizgasabzugsseitige Zone, abgegrenzt gegen den wasserführenden Innenraum des Gehäuses, zuströmseitig mit dem Rücklaufanschluß in direkter Verbindung steht und abströmseitig, ebenfalls abgegrenzt gegen den Innenraum, mit der Zuströmseite der brennkammerseitigen Zone, die abströmseitig in den Innenraum des Gehäuses ausmündet. Durch diese erfindungsgemäße Ausbildung steht der kalte Rücklauf in der abgasseitigen Zone voll für die Kondensation zur Verfügung.

Durch die an Taschen besonders einfach zu verwirklichende Zonenaufteilung, was noch näher erläutert wird, und die gezielte Zuleitung des relativ kalten Rücklaufes ausschließlich in die heizgasabzugsseitige Zone mit anschließender Weiterleitung des Rücklaufes nach oben durch die brennkammerseitige Zone des Taschenblockes und die sich daran wiederum anschließende Überleitung des Wärmeträgermediums in den eigentlichen Heizkessel- bzw. Brennkammerteil des Heizkessels ergibt sich eine klare Staffelung bezgl. der Temperaturen des Wärmeträgermediums insbesondere im Bereich des einen Nachschaltwärmetauscher bildenden Taschenblockes, der nicht nur sauber getrennt von oben nach unten und im unmittelbaren Anschluß von unten nach oben quer zu den im wesentlichen horizontal durchströmenden Heizgasen vom Rücklauf durchströmt wird, sondern der außerdem in seinem separierten Bereich noch insgesamt vom Wärmeträger umspült wird. Da sich der in Zonen gegliederte Taschenblock in einem separat gehaltenen Bereich des Gehäuses befindet, ist auch der Forderung nach einfacher, kostengünstiger und kompakter Bauweise genügt. Verwirklicht wird dies in Weiterbildung und praktischer Ausführungsform dadurch, daß für die Abgrenzungen gegen den wasserführenden Innenraum des Gehäuses über der Zone eine mit dem Rücklaufanschluß direkt verbundene Einströmhaube angeordnet ist und unter beiden Zonen eine Überströmhaube.

Bei der hierbei als Einströmhaube und Überströmhaube bezeichneten Elementen handelt es sich letztlich um Leitbleche, die einfach am Taschenblock oben und unten anzuheften sind. Abgesehen davon hat eine derartige Konstruktion den Vorteil, daß der relativ kalte Rücklauf auch nicht teilweise in den Erstreckungsbereich der Brennkammer gelangt, und zwar selbst dann nicht, wenn Brennkammer und Taschenblock gemeinsam in einem gemeinsamen, wasserfüherenden Gehäuse untergebracht sind.

Vorzugsweise wird jedoch das Gehäuse derart ausgebildet, daß der die Wassertaschen enthaltende Bereich des Gehäuses als separat gefertigter Gehäuseteil ausgebildet und unter hydraulischer Verbindung mit dem Gehäuse durch Verschweißung oder Verflanschung oder Verrohrung verbunden ist.

Bezüglich der Zonenausbildung am Taschenblock bzw. an den Taschen bestehen zwei Möglichkeiten:

Zum einen können die Taschen mit einer vertilkal orientierten , geprägten Vertikalteilung versehen werden, zum anderen ist es aber auch möglich, für jede Zone entsprechend breite, unmittelbar hintereinander angeordnete Einzeltaschen vorzusehen. Mit Rücksicht auf eine optimale Ausnutzung des kalten Rücklaufes wird dabei vorteilhaft die heizgasabzugsseitige Zone mit einer größeren Breite als die brennkammerseitige Zone bemessen.

Eine vorteilhafte Weiterbildung besteht ferner darin, daß am Überströmkanal ein zweiter Rücklaufanschluß in den Überströmkanal einmündend angeordnet ist. Dadurch ist die Möglichkeit geschaffen, Heizkreise, die mit höherer Temperatur gefahren werden und die auch eine höhere Rücklauftemperatur haben, mit dem gleichen Kessel zu betreiben, ohne daß dabei mit diesem Rücklauf die für die Vollkondensation bestimmte Zone belastet wird.

Sowohl von der Fertigung als auch der anzustrebenden Kompaktbauweise und auch von der anströmseitigen Belastung des Taschenblockes her gesehen ist ferner vorgesehen, daß den Wassertaschen heizgasanströmseitig ein vertikal orientiertes, mindestens einlagiges Rohrregister vorgeschaltet ist, dessen Rohre unten vom Überströmkanal abgehen und oben im Innenraum des Gehäusebereiches ausmünden, in dem der Taschenblock angeordnet ist. Abgesehen vom fertigungstechnisch einfachen Einbezug solcher Rohrregister in den den Taschenblock aufnehmenden Gehäuseteil, strömt diesem Rohrregister gezielt aus dem Überströmkanal noch relativ kalter Rücklauf zu. Nach Passage des Rohrregisters, das noch verbessert vorzugsweise aus zwei Rohrlagen mit zueinander versetzten Rohren gebildet wird, gelangt dann der hier schon relativ stark aufgeheizte Rücklauf direkt in den die Brennkammer umgebenden wasserführenden Innenraum des eigentlichen Kesselgehäuses.

Der erfindungsgemäße Heizkessel und weitere, besondere Ausführungsformen werden nachfolgend an Hand der zeichnerischen Darstellung von Ausführungsbeispielen näher erläutert.

Es zeigt schematisch
- Fig.1: einen Längsschnitt durch den Heizkessel;
- Fig.2: einen Schnitt längs Linie II-II durch den Heizkessel gemäß Fig.1;
- Fig.3: einen Längsschnitt durch den Heizkessel in anderer Ausführungsform;
- Fig.4: einen Schnitt längs Linie IV-IV durch den Heizkessel gemäß Fig.3;
- Fig.5: einen Längsschnitt durch den Heizkessel in einer weiteren Ausführungsform;
- Fig.6: einen Schnitt längs Linie VI-VI durch den Heizkessel gemäß Fig. 5 und
- Fig.7: perspektivisch und schematisch den Taschenblock in Einzeldarstellung.

Der Heizkessel besteht nach wie vor aus einem wasserführenden Gehäuse 1 mit Vor-und Rücklaufanschlüssen 2,3 und mit einer Brennkammer 4, hinter der mehrere parallel nebeneinander angeordnete, zu einem von den Heizgasen durchströmbaren Block 5 zusammengefaßte, im wesentlichen vertikal vom Wärmeträger durchströmbare Wassertaschen 6 angeordnet sind.

Für einen solchen Heizkessel ist nun wesentlich, und dies gilt für alle Ausführungsbeispiele, daß die von der Brennkammer 4 aus im wesentlichen horizontal anströmbaren Wassertaschen 6 wasserseitig in zwei vertikal durchströmbare, unmittelbar nebeneinander angeorndete Zonen 7,8 gegliedert sind, von denen die heizgasabzugsseitige Zone 8, abgegrenzt gegen den wasserführenden Innenraum I des Gehäuses 1, zuströmseitig mit dem Rücklaufanschluß 3 in direter Verbindung steht und abströmseitig, ebenfalls abgegrenzt gegen den Innenraum I, mit der Zuströmseite der brennkammerseitigen Zone 7, die abströmseitig in den Innenraum I des Gehäuses 1 ausmündet.

Praktisch verwirklicht ist dies dadurch, und auch dies gilt für alle Ausführungsformen, daß für die Abgrenzungen gegen den wasserführenden Innenraum I des Gehäuses 1 über der Zone 8 eine mit dem Rücklaufanschluß 3 direkt verbundene Einströmhaube 9 angeordnet ist und unter beiden Zonen 7,8 eine Überströmhaube 10.

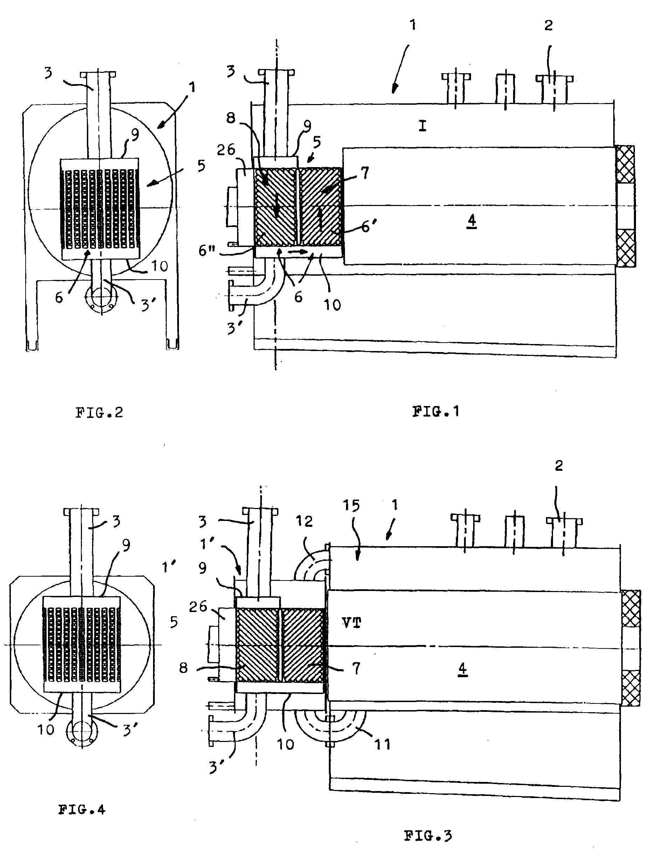

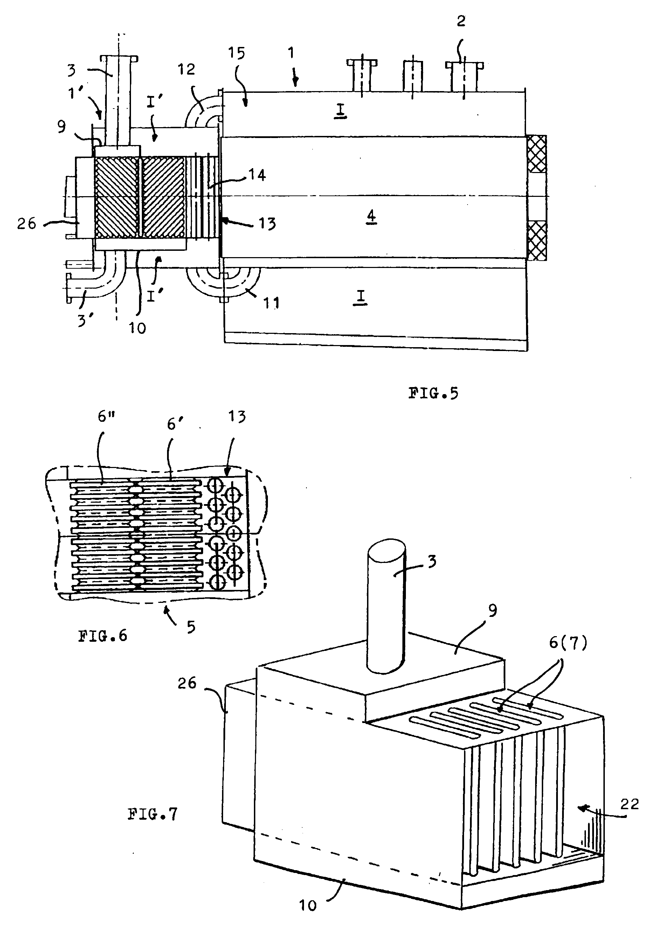

In den Fig.5,6 sind zwar dem Taschenblock 5 vorgesetzte und abschirmende Rohrregister 13 mit dargestellt, diesbezüglich sei aber darauf hingewiesen, daß es sich dabei um eine besondere, aber nicht zwingend vorzusehende Ausführungsform handelt, d.h., der Taschenblock kann sich gemäß Fig.1,3 auch unmittelbar an die Brennkammer 4 anschließen.

Gemäß Fig.1,3 und 6 sind die Wassertaschen 6 jeweils in zwei vertikal orientierte Durchströmzonen 7,8 für den Wärmeträger gegliedert. Dadurch ergibt sich eine Strömungsführung wie einleitend vorerwähnt, d.h., in der Durchströmzone 8 strömt das dieser direkt durch die Einströmhaube 9 zugeführte kalte Rücklaufwasser nach unten, das dann, nach Umlenkung in der Überströmhaube 10, durch die Durchströmzone 7 der Wassertaschen 6 und (sofern vorhanden) durch ein Rohrregister 13 nach oben in den Abströmraum 21 und damit in das Gehäuse 1 gelangt.

Wie aus Fig.6,7 ersichtlich, sind die Wassertaschen 6 in Form einer kastenförmigen Baueinheit bzw. eines kastenförmigen Heizgasdurchströmkanales 22 an den Boden 23 der Brennkammer 4 des Gehäuses 1 angesetzt, der einen entsprechenden Ausschnitt für den Heizgasdurchströmkanal des Taschenblockes 5 aufweist.

Die spezielle Ausbildung der Wassertaschen 6 bedarf an sich keiner näheren Erläuterung, da derartige Wassertaschen und daraus gebildete, von Heizgasen quer durchströmbare Taschenblöcke im Heizkesselbau hinlänglich bekannt sind, so auch eine Ausbildung dahingehend, daß sich die wellenartig profilierten, zueinander bzgl. ihrer Wellen verschränkten Taschenflanken gegenseitig abstützen, was auch im vorliegenden Fall bevorzugt vorgesehen ist.
Die Vertikalteilung VT zur Zonenausbildung an den Wassertauschen 6 ist vorzugsweise so angelegt, daß die abgasabzugsseitige Zone 7 breiter ist als die andere Zone 8. Dies ist nicht besonders dargestellt, da ohne weiteres vorstellbar.
Die Verwendung von Wassertaschenfür eine solche Vertikalaufteilung ist insofern von besonderer Bedeutung, als sich eine solche Vertikalteilung eines Nachschaltwärmetauschers besonders einfach an solchen Taschen durch eine entsprechende Verpressung bei der Prägeherstellung der Taschenwände verwirklichen läßt. Die beiden vertikal durchströmbaren Zonen lassen sich aber auch derart verwirklichen (siehe Fig.6), daß man Taschen 6',6'' im Block 5 unmittelbar hintereinander anordnet.

Bei der Ausführungsform nach Fig.1,2 befinden sich Brennkammer 4 und Taschenblock 5 im wasserfpührenden Innenraum I des Gehäuses 1, d.h., eine besondere hydraulische Verbindung der Anordnungsbereiche von Brennkammer 4 und Taschenblock 5 ist hierbei nicht erforderlich.

Anders verhält es sich bei den Auisführungsbeispielen nach den Fig.3,5, die sich untereinander wiederum dadurch unterscheiden, daß bei der Ausführungsform nach Fig.5 dem Taschenblock 5 ein Rohrregister 13 anströmseitig vorgeschaltet ist (siehe hierzu auch Fig.6)

Bei den Ausführungsbeispielen nach Fig.3,5 sitzt der Taschenblock 5 in einem separaten und insoweit auch vorteilhaft separat herstellbaren, wasserführenden Gehäuseteil 1', zwischen dessen Stirnwänden der Taschenblock 5 gemäß Fig.7 eingesetzt ist. Die Stirnwände sind dafür mit entsprechenden Ausschnitten versehen, und zwar einerseits anströmseitig für den Eintritt der Heizgase in den Block 5 und abströmseitig für den Durchgriff der Abgassammelkammer 26, die Teil des Taschenblockes 5 bzw. des Durchströmkanales für die Heizgase ist.

Die hydraulische Verbindung des wasserführenden Innenraumes I' des Gehäuseteiles 1' wird dabei, bevorzugt und wie in Fig.3,5 dargestellt, durch anflanschbare Verrohrungen (Rohrkrümmer) hergestellt. Möglich ist aber auch bei entsprechender Anpassung des Querschnittes des Gehäuseteiles 1' und bei Anordnung zueinander fluchtender Durchströmöffnungen (nicht dargestellt), den Gehäuseteil 1' insgesamt abgedichtet anzuflanschen oder auch anzuschweißen.

Wie in Fig.3,5 mit dargestellt, kann dabei aus dem einleitend genannten Grund an die Überströmhaube 10 ein zweiter Rücklaufanschluß 3' in die Überströmhaube 1o einmündend angeordnet werden.

Wenn die Rohre 14 des bei der Ausführungsform nach Fig.5,6 mit vorgesehenen und dem Taschenblock 5 vorgeschalteten, vorzugsweise zweilagigen Rohrregisters 13 ebenfalls von der Überströmhaube 10 abgehen, die oben im Innenraum I' des Gehäuseteiles 1' ausmünden, so ist in der Überströmhaube 10 eine Strömungsdrossel (nicht besonders dargestellt) anzuordnen, da dafür sorgt, daß der aus der Zone 8 anströmende Rücklauf nicht zum größeren Teil durch das Rohrregister 13 strömt. Das Rohrregister 13 kann aber auch so angeordnet werden, daß, wie in Fig.5 dargestellt, der untere Bereich des Innenraumes I' direkt mit dem oberen Bereich bzw. Abströmraum des Innenraumes I' durch das Rohrregister 13 in Verbindung steht.

Auch bei dieser Ausführungsform läßt sich der ganze Nachschaltwärmetauscher bzw. der Gehäuseteil 1' einschließlich des Rohrregisters 13 vorteilhaft als völlig separate Baueinheit herstellen, die beim Zusammenfügen mit dem Gehäuse 1 natürlich einer gasseitigen Abdichtung bedarf.

Insbesondere im Falle einer hydraulischen Verbindung mittels der Krümmern 11,12, wie in Fig.3 und 5 dargestellt, ist eine Ausführungsform dahingehend vorgesehen, daß der ansonsten im wesentlichen dem Querschnitt des Gehäuseteiles 1' entsprechende Querschnitt des Gehäuses 1 nach oben erweitert und an diese Erweiterung 15 der obere Krümmer 12 angeschlossen ist.

## Patentansprüche

1. Brennwertheizkessel zum Verbrennen flüssiger oder gasförmiger Brennstoffe, bestehend aus einem wasserführenden Gehäuse (1) mit Vor-und Rücklaufanschlüssen (2,3) und mit einer Brennkammer (4), hinter der mehrere parallel nebeneinander angeordnete, zu einem von den Heizgasen durchströmbaren Block (5) zusammengefaßte, im wesentlichen vertikal vom Wärmeträger durchströmbare Wassertaschen (6) angeordnet sind,
**dadurch gekennzeichnet**,
daß die von der Brennkammer (4) aus im wesentlichen horizontal anströmbaren Wassertaschen (6) wasserseitig in zwei vertikal durchströmbare, unmittelbar nebeneinander angeorndete Zonen (7,8) gegliedert sind, von denen die heizgasabzugsseitige Zone (8), abgegrenzt gegen den wasserführenden Innenraum (I) des Gehäuses (1), zuströmseitig mit dem Rücklaufanschluß (3) in direter Verbindung steht und abströmseitig, ebenfalls abgegrenzt gegen den Innenraum (I), mit der Zuströmseite der brennkammerseitigen Zone (7), die abströmseitig in den Innenraum (I) des Gehäuses (1) ausmündet.

2. Heizkessel nach Anspruch 1,
**dadurch gekennzeichnet**,
daß für die Abgrenzungen gegen den wasserführenden Innenraum (I) des Gehäuses (1) über der Zone (8) eine mit dem Rücklaufanschluß (3) direkt verbundene Einströmhaube (9) angeordnet ist und unter beiden Zonen (7,8) eine Überströmhaube (10).

3. Heizkessel nach Anspruch 1 oder 2,
**dadurch gekennzeichnet**,
daß der die Wassertaschen (6) enthaltende Bereich des Gehäuses (1) als separat gefertigter Gehäuseteil (1') ausgebildet und unter hydraulischer Verbindung mit dem Gehäuse (1) durch Verschweißung oder Verflanschung oder Verrohrung verbunden ist.

4. Heizkessel nach einem der Ansprüche 1 bis 3,
**dadurch gekennzeichnet**,
daß für die Zonengliederung der Wassertaschen (6) diese mit einer vertikal orientierten und geprägten Vertikalteilung (VT) versehen sind.

5. Heizkessel nach einem der Ansprüche 1 bis 3,
**dadurch gekennzeichnet**,
daß jede der Zonen (7,8) durch separate Wassertaschen (6',6'') gebildet ist.

6. Heizkessel nach einem der Ansprüche 1 bis 5,
**dadurch gekennzeichnet**,
daß die heizgasabzugsseitige Zone (8) mit einer größeren Breite (B) als die brennkammerseitige Zone (7) bemessen ist.

7. Heizkessel nach einem der Ansprüche 1 bis 6,
**dadurch gekennzeichnet**,
daß an der Überströmhaube (10) ein zweiter Rücklaufanschluß (3') in diese einmündend angeordnet ist.

8. Heizkessel nach einem der Ansprüche 2 bis 7,
**dadurch gekennzeichnet,**
daß der ansonsten im wesentlichen dem Querschnitt des separat gefertigten Gehäuseteiles (1') entsprechende Querschnitt des Gehäuses (1) nach oben erweitert und an diese Erweiterung (15) ein oberer, beide Innenräume (I,I') verbindender Krümmer (12) angeschlossen ist.

9. Heizkessel nach einem der Ansprüche 1 bis 8,
**dadurch gekennzeichnet,**
daß den Wassertaschen (6) heizgasanströmseitig ein vertikal orientiertes, mindestens einlagiges Rohrregister (13) vorgeschaltet ist, dessen Rohre (14) unten von der mit einer Strömungsdrossel versehenen Überströmhaube (10) abgehen oder aus dem unteren Bereich des Innenraumes (I') und oben im Innenraum (I') des Gehäuses(1) ausmünden.
